(19) Europäisches Patentamt
European Patent Office
Office européen des brevets

(11) **EP 4 697 220 A1**

(12) **EUROPEAN PATENT APPLICATION**

(43) Date of publication:
**18.02.2026 Bulletin 2026/08**

(21) Application number: **25196028.2**

(22) Date of filing: **14.08.2025**

(51) International Patent Classification (IPC):
**G06F 21/62** (2013.01)    **H04L 9/00** (2022.01)
**H04W 12/02** (2009.01)

(52) Cooperative Patent Classification (CPC):
**G06F 21/6254; G06F 21/6227; H04L 9/008;
H04W 12/02;** H04L 2209/46

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **16.08.2024 IN 202411062074**

(71) Applicant: **GOOGLE LLC
Mountain View CA 94043 (US)**

(72) Inventors:
• **Sologoub, Peter
 Mountain View, 94043 (US)**
• **Chauhan, Satvik
 Mountain View, 94043 (US)**
• **Lee, Da Won
 Mountain View, 94043 (US)**
• **Lam, Kevin Kae
 Mountain View, 94043 (US)**
• **Yeo, Kevin Wei Li
 Mountain View, 94043 (US)**

(74) Representative: **Marks & Clerk GST
1 New York Street
Manchester M1 4HD (GB)**

(54) **SECURE DATA EXCHANGE**

(57) Methods, systems, and apparatus, including computer programs encoded on a computer storage medium, for exchanging data in secure ways. In one aspect, a method includes sending, by a query app to a service apparatus, a first encrypted identifier generated by the query app and a first hashed identifier generated by the query app. A data app obtains, from the service apparatus, a set of encrypted identifiers that are mapped to hashed identifiers that match the first hashed identifier. For each of one or more values, the data app sends, to the service apparatus, a set of data that includes a second encrypted identifier, a respective encrypted value element that encrypts the value, and one or more first tuples. The query app obtains, from the service apparatus, one or more second tuples that are each mapped at the service apparatus to an encrypted identifier that matches the first encrypted identifier.

FIG. 1

**Description**

TECHNICAL FIELD

This specification relates to cryptography and using private information retrieval to exchange data between applications (e.g., mobile apps) on a device.

BACKGROUND

Private information retrieval is a cryptographic protocol that allows a device to retrieve an item from another device without the other device being able to determine which item was retrieved. Private set membership check is a cryptographic protocol that allows a device to privately query whether the device's identifier is a member of a set of identifiers held by another device.

SUMMARY

This document describes an enhanced cryptographic protocol that enables private set membership checks between two applications (e.g., on a same device) or two devices that are unable to communicate directly. In general, device platforms do not allow mobile applications ("mobile apps") to communicate directly with each other. Instead, the only method of communication must be between any of the apps and a server. Even if such direct communication was allowed, this would present privacy concerns as each application could learn information about a user of the device without consent.

The enhanced private set membership check protocol described in this document enables private set membership checks between apps installed on the same device when direct communication is not allowed, if the apps are not active or otherwise available at the same time, and without the apps sharing any information stored on the device. The protocol enables the two apps to perform various portions of the protocol asynchronously when they are available and active.

The enhanced private set membership check protocol employs a service apparatus to store encrypted data that represents potential matches for a query application ("query app") that will submit queries for data that matches an identifier of the device or its user. This data can be uploaded to the service apparatus by a data application ("data app") that stores data on the same device as the query app. That is, the query app and the data app can be installed on and executed on the same device, but may be prevented from direct communication. Using the enhanced private set membership check protocol described in this document, the data app can synchronize data with the query app through the service apparatus without the service apparatus learning the identity of the user or the membership results of any query. Additionally, the apps only learn the outputs relevant to the query. In particular, the query app does not learn any information other than the result of the query and the associated value(s). For example, the query app would not learn anything about other members of the set outside of the user of the device for which the identifier was used for the query. The data app does not learn anything except, in some optional cases described herein, the membership result of the query app's query.

In general, one innovative aspect of the subject matter described in this specification can be embodied in methods that include the actions of sending, by a query app of a first client device and to a service apparatus, a first encrypted identifier generated by the query app and a first hashed identifier generated by the query app; obtaining, by a data app of a second client device and from the service apparatus, a set of encrypted identifiers that are mapped, in a first map, to hashed identifiers that match the first hashed identifier, wherein the data app is configured to store data that is queried by the query app; for each value of one or more values, sending, by the data app and to the service apparatus, a set of data comprising (i) a second encrypted identifier generated by the data app, (ii) a respective encrypted value element that encrypts the value, and (iii) one or more first tuples, wherein each first tuple comprises a given first encrypted identifier from the first map and a doubly-encrypted identifier; obtaining, by the query app and from the service apparatus, one or more second tuples that are each mapped, in a second map, at the service apparatus to an encrypted identifier that matches the first encrypted identifier, wherein each second tuple comprises a respective encrypted second identifier, an encrypted value element that encrypts a corresponding value, and a doubly-encrypted identifier; for each second tuple, determining, by the query app, whether the doubly-encrypted identifier represents an identifier that matches the second encrypted identifier; and for each second tuple for which the doubly-encrypted identifier represents an identifier that matches the second encrypted identifier, decrypting, by the query app, the encrypted value element of the second tuple. Other implementations of this aspect include corresponding apparatus, systems, and computer programs, configured to perform the aspects of the methods, encoded on computer storage devices.

These and other embodiments can each optionally include one or more of the following features. In some aspects, the first client device is the same device as the second client device.

In some aspects, the query app is unable to communicate directly with the data app on the client device.

In some aspects, the first client device is a different device than the second client device.

In some aspects, each identifier comprises an identifier of a user of the client device.

Some aspects include, for each second tuple for which the doubly-encrypted identifier represents an identifier that matches the second encrypted identifier, sending the decrypted value to the service apparatus.

In some aspects, the corresponding value of each second tuple for which the doubly-encrypted identifier represents an identifier that matches the second encrypted identifier comprises an identifier of an app installed on the client device. The service apparatus can be configured to select digital components for presentation at the client device based on each decrypted value received from the query app.

In some aspects, the first map comprises a mapping of encrypted identifiers to hashed identifiers received from the service apparatus for multiple different query apps installed on the first client device.

Some aspects include, for each second tuple for which the doubly-encrypted identifier that represents an identifier that matches the second encrypted identifier, computing a candidate intermediate encrypted identifier based on the doubly-encrypted identifier and a private key of the query app; computing a candidate encrypted identifier by applying a first hash function to the candidate intermediate identifier; determining whether the candidate encrypted identifier matches the second encrypted identifier of the second tuple; in response to determining that the encrypted candidate intermediate identifier matches the second encrypted identifier of the second tuple, decrypting the encrypting value element of the second tuple; computing an encrypted match parameter by applying a second hash function to the candidate intermediate encrypted identifier; appending a tuple that includes the encrypted match parameter and the second encrypted identifier of the second tuple to a result list; sending the tuple to the service apparatus.

Some aspects include obtaining, by the data app and from the service apparatus, a portion of a third map that maps encrypted match parameters to second encrypted identifiers; computing a match parameter based on an intermediate encrypted identifier computed by the data app; determining whether the match parameter matches any encrypted match parameter in the portion of the third map; and in response to determining that the match parameter matches at least one encrypted match parameter in the portion of the third map, determining that at least one query submitted by at least one query app matches data of the data app.

Particular embodiments of the subject matter described in this specification can be implemented so as to realize one or more of the following advantages. The enhanced private set membership check protocol described in this document enables private set membership checks between parties (e.g., apps or devices) that are unable to communicate directly, between such parties when they are not active at the same time (e.g., the parties are asynchronous), and without having any shared information between the parties before performing the protocol (e.g., no shared private keys). The enhanced private set membership check protocol employs a service apparatus to store encrypted membership data and to perform portions of the protocol in ways that enable the private set membership checks without direct communication and without the service apparatus learning the identity of the user of the device or the results of any query. The private set membership protocol ensures that neither party in the process learns any identifier of an entity, e.g., of a user, in plaintext throughout the protocol. Notably, the protocol is configured such that the service apparatus does not learn anything about any identifier or even the identifiers themselves. For example, the service apparatus only learns a portion of a hash of each identifier, whereas each app or device participating in the protocol does not learn any information about identifiers beyond their own queried or imported identifiers.

The private set membership protocol can be used to exchange data on device in a private manner even in situations where apps running on the same device are unable to communicate directly and/or are not active at the same time. This can enable many use cases for on-device private information retrieval that would not be practical absent the private set membership check protocol described in this document. For example, a data app can sync user profile data (e.g., that indicates apps installed on the device) to query apps such that the query app can use the data to select and/or customize content for a user of the device. Absent the described private set membership protocol, user data would need to be shared with a content server, e.g., using third-party cookies, which exposes potentially sensitive user data with other entities.

The details of one or more embodiments of the subject matter described in this specification are set forth in the accompanying drawings and the description below. Other features, aspects, and advantages of the subject matter will become apparent from the description, the drawings, and the claims.

BRIEF DESCRIPTION OF THE DRAWINGS

FIG. 1 is a block diagram of an example environment in which a private set membership protocol is used to exchange data.

FIG. 2 is a flow chart of an example process of exchanging data using a private set membership check protocol.

FIG. 3 is a flow chart of an example process of exchanging data using a private set membership check protocol.

FIG. 4 is a block diagram of an example computer.

Like reference numbers and designations in the various drawings indicate like elements.

DETAILED DESCRIPTION

This document describes an enhanced cryptographic protocol that enables private set membership checks between two applications (e.g., on a same device) or two devices that are unable to communicate directly. The private set membership check protocol can be used to share various types of data between the apps and/or devices without either app or device learning more information than allowed by the protocol. This enhances data security as well as user privacy when the data is related to users.

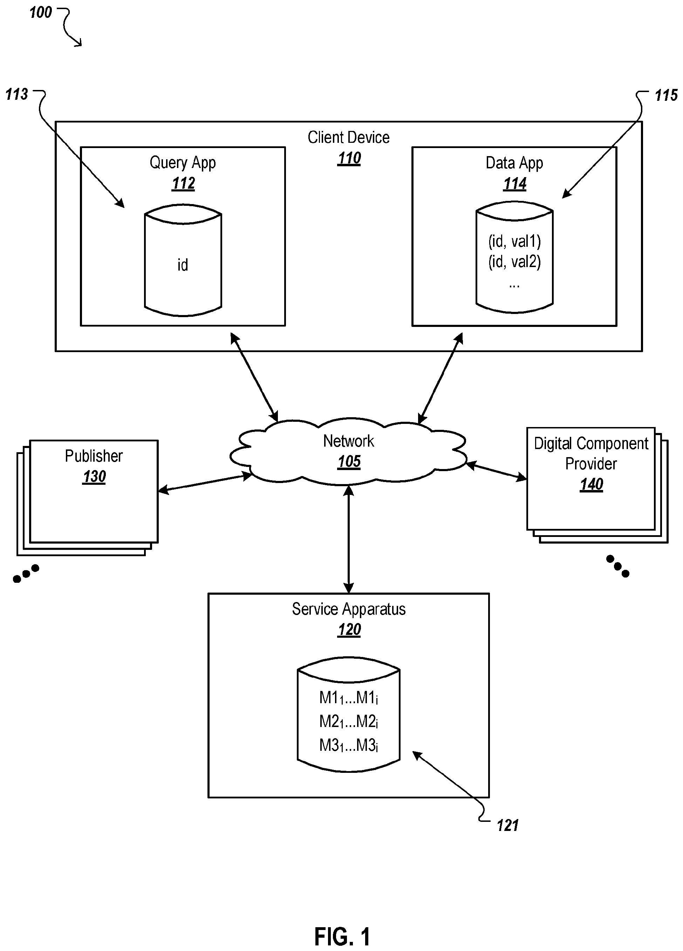

FIG. 1 is a block diagram of an example environment 100 in which a private set membership protocol is used to exchange data. The example environment 100 includes a network 105, such as a local area network (LAN), a wide area network (WAN), the Internet, or a combination thereof. The network 105 connects client devices 110, a service apparatus 120, publishers 130 (e.g., computers of publishers 130), and digital component providers 140 (e.g., computers of digital component providers 140). The example environment 100 can include many different client devices 110, service apparatus 120, publishers 130, and digital component providers 140.

Example client devices 110 include personal computers, gaming devices, mobile communication devices, digital assistant devices, augmented reality devices, virtual reality devices, and other devices that can send and receive data over a network 105. A client device 110 typically includes a user application, such as a web browser, to facilitate the sending and receiving of data over the network 105, but native applications (other than browsers) executed by the client device 110 can also facilitate the sending and receiving of data over the network 105.

A gaming device is a device that enables a user to engage in gaming applications, for example, in which the user has control over one or more characters, avatars, or other rendered content presented in the gaming application. A gaming device typically includes a computer processor, a memory device, and a controller interface (either physical or visually rendered) that enables user control over content rendered by the gaming application. The gaming device can store and execute the gaming application locally, or execute a gaming application that is at least partly stored and/or served by a cloud server (e.g., online gaming applications). Similarly, the gaming device can interface with a gaming server that executes the gaming application and "streams" the gaming application to the gaming device. The gaming device may be a tablet device, mobile telecommunications device, a computer, or another device that performs other functions beyond executing the gaming application.

Digital assistant devices include devices that include a microphone and a speaker. Digital assistant devices are generally capable of receiving input by way of voice, and respond with content using audible feedback, and can present other audible information. In some situations, digital assistant devices also include a visual display or are in communication with a visual display (e.g., by way of a wireless or wired connection). Feedback or other information can also be provided visually when a visual display is present. In some situations, digital assistant devices can also control other devices, such as lights, locks, cameras, climate control devices, alarm systems, and other devices that are registered with the digital assistant device.

The private set membership protocol can be used to exchange data between the data app 114 and the query app 112 that are installed on and/or executed by a client device 110. For example, the data app 114 can store data, e.g., in the form of key value pairs or in another appropriate form, and the query app 114 can query data from the data app 114 using the private set membership protocol. Although a single query app 112 is shown in FIG. 1, multiple query apps 112 can be installed on the client device 110 and can execute the private set membership protocol to exchange data with the data app 114. A client device 110 can also include multiple data apps, e.g., one for each type of data and/or one for data managed by each of different entities. Each query app 112 and data app 114 pair can perform the private set membership check protocol to synchronize data.

The query app 112 and the data app 114 can also be installed on different client devices 110, e.g., of the same user. If the same identifier is used by the two apps on the different devices, the apps 112 and 114 can perform the private set membership check protocol across the two devices 110 to synchronize data.

The query app 112 and the data app 114 can execute the private set membership protocol via the service apparatus 120 since the apps 112 and 114 are unable to communicate directly on the client device 110. The private set membership protocol is configured to include multiple stages such that the data can be exchanged asynchronously without requiring the apps 112 and 114 to be active at the same time.

In a particular example, the data app 114 can store data that indicates apps that are installed on the client device 110. For example, the data can include an identifier (e.g., name) of each app that is installed on the client device 110. In another example, the data may only include the identifier of each app for which a common user identifier for the user of the client device 110 is associated with the app. For example, the data may only include the apps for which the user used a particular user identifier to register with and/or sign into the app. The user identifier can be a name, phone number, e-mail address, or other appropriate user identifier. Limiting the data to such a common identifier protects the user's privacy by limiting the knowledge of both the query app 112 and the data app 114 to only apps that are linked to the user using the common user identifier. The user identifier is also referred to as "id" herein.

In another example, the data app 114 can store user profile data for the user of the client device 110. This can include data indicating web pages visited by the user, particular actions performed at those web pages, actions performed in an app (e.g., a web browser app, gaming app, etc.) items purchased by the user, items added to a virtual shopping cart, etc. For example, actions performed in an app can include web pages visited and/or interactions with the web pages in a web browser app; leveling up, stages completed, and/or engagement with (e.g., time spent playing) a gaming app; videos views and their durations in a video sharing app, etc.

Information identifying apps installed on the client device 110 can be used by the query app 112 and/or a service apparatus 120 to condition (e.g., select and/or modify) content that is shown to a user of the client device 110 within the query app 112. In this example, the query app 112 can be an app that shows content to the user and the data identifying the apps can be used to select and/or modify third-party content, e.g., digital components, that are shown with the content of the query app 112. For example, the query app 112 can be a web browser, a video sharing app, an image sharing app, a social networking app, a game app, a news app, and/or another appropriate type of app that shows content to users.

As used throughout this document, the phrase "digital component" refers to a discrete unit of digital content or digital information (e.g., a video clip, audio clip, multimedia clip, gaming content, image, text, bullet point, artificial intelligence output, language model output, or another unit of content). A digital component can electronically be stored in a physical memory device as a single file or in a collection of files, and digital components can take the form of video files, audio files, multimedia files, image files, or text files and include advertising information, such that an advertisement is a type of digital component.

In another example, the private set membership check protocol can be used to share sensitive information, e.g., private keys, documents, etc. In this example, the data app 114 can store the sensitive data and share the sensitive data with the query app 112 using the private set membership check protocol.

The service apparatus 120 is configured to provide various services to client devices 110, publishers 130 of electronic documents, and/or digital component providers 140 that provide digital components to client devices 110, e.g., using the service apparatus 110. The service apparatus 110 can be configured to distribute digital components to client devices 110 for presentation with the responses and/or with electronic documents. The service apparatus 120 can be configured to select the digital components for a client device 110 based on the apps installed on the client device 110 and for which data identifying these apps is provided by the query app 112. As described in more detail below, the query app 112 can provide data identifying the apps to the service apparatus 120 using the private set membership protocol and the service apparatus 120 can select digital components for display with the query app 112 based on the apps installed on the client device 110. In another example, the service apparatus 120 can recommend other content based on this data. For example, if the query app 112 is a video sharing app, the service apparatus 120 can recommend other videos for the user based on the data identifying the apps installed on the client device 110.

In a particular example, the service apparatus 120 can be configured to prevent the display of a digital component that includes content for downloading a given app if the given app is already installed on the client device 110. In another example, the service apparatus 120 can be configured to send a digital component related to an in-app offer for a given app if the given app is installed on the client device 110.

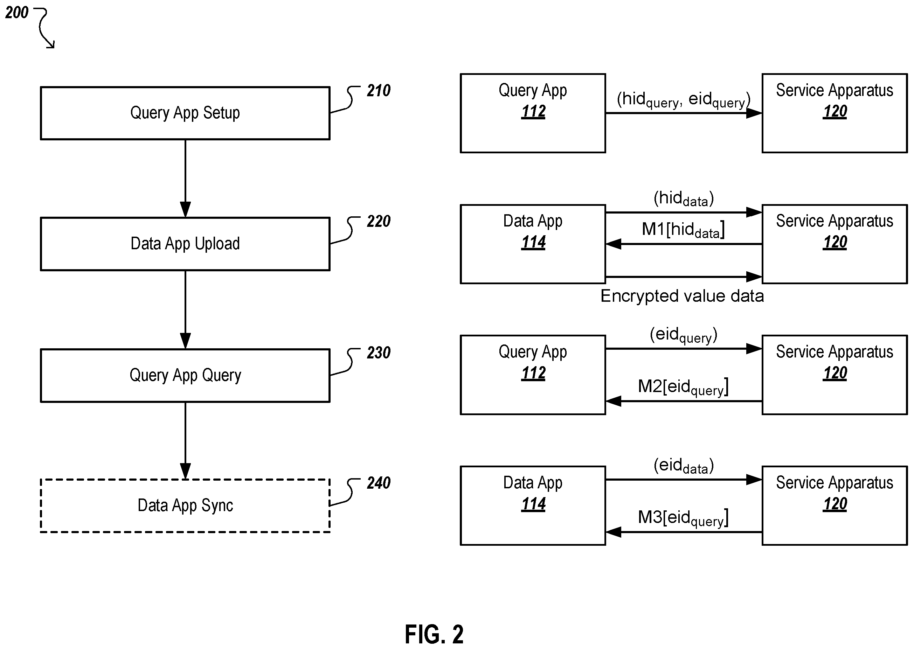

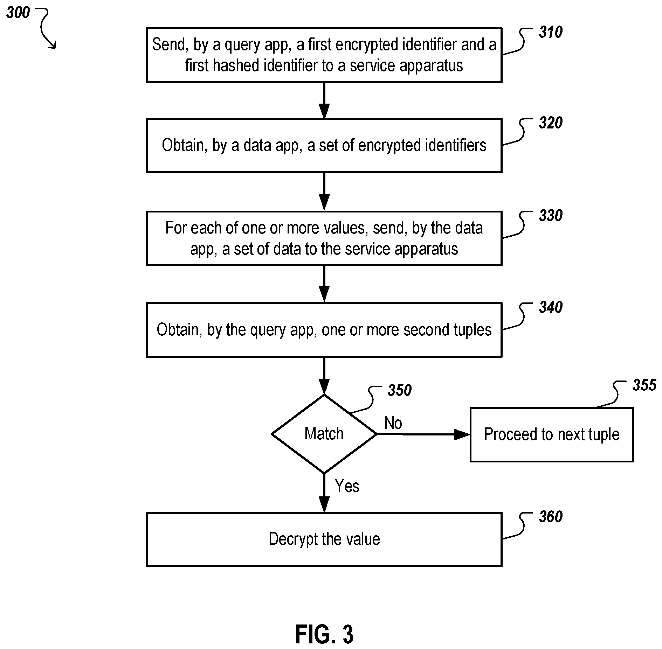

The service apparatus 120 also performs part of the private set membership check protocol and stores data uploaded to the service apparatus 120, e.g., by data apps 114 installed on multiple client devices 100. This enables the protocol to be performed even in situations in which apps installed on a client device 110 cannot communicate directly and/or are not active at the same time. The private set membership check protocol is described in more detail with reference to FIGS. 2 and 3 below.

FIG. 2 is a flow chart of an example process 200 of exchanging data using a private set membership check protocol. Operations of the process 200 can be performed, for example, by the client device 110, e.g., by the query app 112 and the data app 114, the service apparatus 120, and/or another data processing apparatus. The operations of the process 200 can also be implemented as instructions stored on one or more computer readable media, which can be non-transitory. Execution of the instructions, by one or more data processing apparatus, causes the one or more data processing apparatus to perform operations of the process 200.

The private set membership protocol includes multiple stages such that the protocol can be executed by the query app 112, the data app 114, and the service apparatus 120 asynchronously without all three components being active or otherwise available at the same time. In this example, the private set membership check protocol includes a query app setup stage 210, a data app upload stage 220, a query app query stage 230, and an optional data app sync stage 240.

In the example process 200, HKDF can be an HMAC-based key derivation function that may be used as PRG to sufficiently generate encryption keys. Let (*Enc, Dec*) be a symmetric key authenticated encryption scheme, which can be AES-GCM. That is, if the ciphertext is malformed or tampered with, the decryption function will return an error.

Two hash functions $H$ and $H'$ can be used to encrypt or mask user identifiers *ids*. The hash function $H$ can be a hash function from strings to Elliptic curve points. For example, the hash function *H* can be a constant-time algorithm in the IETF standard RFC 9380. The hash function *H'* can be a hash function from strings to strings. For example, the hash function can be a SHA256 or SHA386 hash function. The private set membership protocol can be configured to ensure that the hash function *H'* produces collisions only with negligible probability by ensuring that the output of *H'* is sufficiently long, e.g., at least 32 or 64 bytes. Other equivalent or similar hash functions can also be used in place of *H* and *H'*.

It can be assumed that all hash functions are domain separated. For example, HKDF can use different information parameters and hash functions (e.g., SHA256 or SHA382) can use different salts appended to the input.

The query app 112 can store a local private key Q. If the data app 114 wants to synchronize data as described below, the data app 114 can also store a local private key D.

The service apparatus 120 can store two maps M1 and M2, and optionally a third map M3. The map M1 is a map from L-bit hash prefixes of user identifiers received from query apps 112 of multiple client devices 110 to their encrypted identifiers. The map M2 is a map from a full-length hash of encrypted user identifiers received from the query apps 112 of the multiple client devices 110 to a tuple of (i) user identifiers received from the data apps 114 of the multiple client devices 110, doubly encrypted user identifiers, and (iii) encrypted values received from the data apps 114 of the multiple client devices 110. The optional map M3 is a map from a full-length hash of encrypted identifiers received from the data apps 114 to a list of encrypted values from the data app 114.

In the query app setup stage (210), the query app 112 sends representations of the user identifier *id* for the user to the service apparatus 120 to obtain data from the data app 114. The query app 112 can initiate this stage 210 in response to the user logging into the query app 112, e.g., for the first time, on the client device 110.

The query app 112 generates a hashed identifier *hid* for the user based on the user identifier *id* for the user of the client device 110. The hashed identifier *hid* can be generated by applying the hash function *H'* to the user identifier, e.g., using Equation 1 below:

$$\text{Equation 1:} \quad hid_{query} = H'\big(id_{query}\big)_{1...L}$$

In Equation 1, $hid_{query}$ is the hashed identifier and $id_{query}$ is the user identifier for the user known by the query app 112. The notation 1 ... L indicates that only *L* bits of the hash result of the hash function are kept as the hashed identifier. That is, *L* denotes the bit length of hashes that is revealed in the hashed identifier $hid_{query}$. This can be the first L bits, the last *L* bits, or another appropriate *L* bits of the hash result. The bit length *L* enables k-anonymity within the private set membership protocol. Smaller values of *L* result in stronger k-anonymity (larger k). The value of *L* can be selected to be as small as possible depending on the tolerable or target amounts of communications between the service apparatus 120 and the apps 112 and 114.

The query app 112 also generates an encrypted identifier $eid_{query}$ for the user based on the user identifier *id* for the user of the client device 110. The encrypted identifier for the user can be generated by applying another hash function *H* to the user identifier $id_{query}$ of the user known by the query app 112, e.g., using Equation 2 below:

$$\text{Equation 2:} \quad eid_{query} = H(id_{query})^Q$$

In Equation 2, the hash function *H* is applied to the user identifier $id_{query}$ using the query app's local private key Q.

The query 112 sends ($hid_{query}$, $eid_{query}$), which is a tuple that includes the hashed identifier $hid_{query}$ and the encrypted identifier $eid_{query}$ generated by the query app 112, to the service apparatus 120.

The service apparatus 120 receives this tuple ($hid_{query}$, $eid_{query}$) and uses the tuple to generate or update the map M1. For example, the service apparatus 120 can append a map between the received hashed identifier $hid_{query}$ to the corresponding encrypted identifier $eid_{query}$ to an existing map $M1$. The service apparatus 120 can store the updated map $M1$.

In the data app upload stage (220), the data app 114 uploads data values to the service apparatus 120. As described above, the data values can be identifiers of apps installed on the client device 110 or other user profile data. This stage 220 can be initiated in response to a change or update in the data. For example, if the user installs a new app on the client device 110, the data app 114 can upload data indicating the current list of apps installed on the client device 110. In some implementations, the data app 114 is an app that manages the apps installed on the client device 110, e.g., an app store app installed on the client device 110. In this way, the data app 114 is aware of the apps installed on the client device 110.

In another example, each app (or at least one or more apps) installed on the client device 110 can be configured to report to the data app 114 that the app has been installed on the client device 110. For example, each installed app can act as the data app 114 and report that that app has been installed on the client device 110 using the private set membership check protocol. In other words, during the reporting, the newly installed app would act as the data app 114 and the data app 114 would act as a query app 112 to obtain the data indicating the newly installed app. In this example, the newly installed app can trigger the private set membership check protocol when the app is installed and the user has provided some identifier to the app.

The data app 114 collects the data to upload to the service apparatus 120. In some implementations, the data app 114 collects, as values $val_{data}$, the identifier(s) of the app(s) installed on the client device 110. Each value can be an identifier of an app installed on the client device 110. The data app 114 also generates a hashed identifier $hid_{data}$ based on the user identifier $id_{data}$ of the user known by the data app 114. For example, the data app 114 can generate the hashed identifier $hid_{data}$ by applying the hash function $H'$ to the user identifier $id_{data}$, e.g., using Equation 3 below:

$$\text{Equation 3:} \quad hid_{data} = H'(id_{data})_{1...L}$$

Similar to the hashed identifier $hid_{query}$ generated by the query app 112, the hashed identifier $hid_{data}$ generated by the data app 114 is limited to the bit length $L$. If the same user identifier for the user is known to both apps, the L-length hashed identifiers would be the same. The data app 114 sends the hashed identifier $hid_{data}$ to the service apparatus 120. For example, the data app 114 can send the hashed identifier $hid_{data}$ to the service apparatus 120 with a request for the map $M$1.

The service apparatus 120 receives the hashed identifier $hid_{data}$. In response, the service apparatus 120 sends a portion of the map M1 to the data app 114. In particular, the service apparatus 120 can identify each encrypted identifier $eid_{query}$ that is mapped to a hashed identifier that matches the hashed identifier $hid_{data}$ and send the identified encrypted identifiers $eid_{query}$ to the data app 114, e.g., in the form of:

$$M1[hid_{data}] = [eid_{query.1}, eid_{query.2}, ... eid_{query.N}].$$

The order of the encrypted identifiers $eid_{query}$ should be independent of time. For example, the encrypted identifiers $eid_{query}$ can be randomly shuffled or in an increasingly (or decreasingly) sorted order by the values of the encrypted identifiers $eid_{query}$. To further enhance privacy, this list of encrypted identifiers $eid_{query}$ can be padded with random values to avoid leaking the size of the map $M$1.

The data app 114 receives the encrypted identifiers $eid_{query}$ from the service apparatus 120 and uses the encrypted identifiers $eid_{query}$ to upload encrypted identifier - value pairs. To do so, the data app 114 generates an intermediate encrypted identifier $intermediate\_eid_{data}$ using the user identifier $id_{data}$. For example, the data app 114 can generate the intermediate encrypted identifier $intermediate\_eid_{data}$ by applying the hash function $H$ to the user identifier $id_{data}$, e.g., using Equation 4 below:

$$\text{Equation 4:} \quad intermediate\_eid_{data} = H(id_{data})^D$$

This is similar to Equation 2, except the hash function $H$ is applied to the user identifier $id_{data}$ using the data app's local private key $D$ rather than the query app's private key $Q$. The data app 114 can store the intermediate encrypted identifier $intermediate\_eid_{data}$ at the client device 110 for use later, e.g., to reduce computation.

The data app 114 generates and encrypted identifier $eid_{data}$ using the intermediate encrypted identifier $intermediate\_eid_{data}$. For example, the data app 114 can generate $eid_{data}$ by applying the hash function $H'$ to the $intermediate\_eid_{data}$, e.g., using Equation 5 below:

$$\text{Equation 5:} \quad eid_{data} = H'(intermediate\_eid_{data})$$

Note that this encrypted identifier $eid_{data}$ is different from the encrypted identifier $eid_{query}$, as $eid_{data}$ is a string whereas $eid_{query}$ is an Elliptic curve point.

The data app 114 also generates a value key $valkey$ using the intermediate encrypted identifier $intermediate\_eid_{data}$. For example, the data app 114 can generate $valkey$ using Equation 6 below:

$$\text{Equation 6:} \quad valkey = HKDF(intermediate\_eid_{data}, \text{info} = \text{``encrypted value key''})$$

In Equation 6, HKDF is the HMAC-based key derivation function and info is information parameters used to compute $valkey$. For example, info can be a salt, e.g., a random bit string, that is used in the hash function, which can be used to avoid rainbow attacks. The info can be sampled once and used across the entire protocol where "encrypted value key" is used as the info. It is important that both $eid_{data}$ and $valkey$ are derived using hash functions with clear domain separation. For example, if $H'$ is also a HKDF, then $eid_{data}$ and *valkey* should be computed using different information parameters.

The data app 114 generates, for each value (e.g., each app identifier), encrypted value data $eval_{data}$ using the value key *valkey* and the value, e.g., using Equation 7 below:

$$\text{Equation 7:} \quad eval_{data} = Enc(valkey, val_{data})$$

In Equation 7, *Enc* is an encryption function and *valkey* is the encryption key used by the encryption function to encrypt the value $val_{data}$.

The data app 114 also generates a doubly-encrypted identifier $deid_i$ for each identifier $eid_{query.1}$, $eid_{query.2}$, ... $eid_{query.N}$ in the map $M$1, e.g., using Equation 8 below:

$$\text{Equation 8:} \quad deid_i = (eid_{query.i})^D$$

In Equation 8, data app's local private key $D$ is used to encrypt each encrypted identifier $eid_{query.i}$ to generate the doubly-encrypted identifier $deid_i$.

For each value $val_{data}$, the data app 114 sends, to the service apparatus 120, (i) the encrypted identifier $eid_{data}$, (ii) the encrypted value data $eval_{data}$ for that value, and, for each encrypted identifier $eid_{query.i}$, (iii) a tuple that includes the encrypted identifier $eid_{query.i}$ and its corresponding doubly-encrypted identifier $deid_i$. This set of tuples can be represented as [($eid_{query.1}$, $deid_1$), ($eid_{query.2}$, $deid_2$), ... ($eid_{query.2}$, $deid_2$)].

The service apparatus 120 receives this data for each value $val_{data}$ and generates or updates the map $M$2 for each value $val_{data}$. For each encrypted identifier $eid_{query.i}$, the service apparatus 120 can append a map between the encrypted identifier $eid_{query.i}$ and (i) the encrypted identifier $eid_{data}$, (ii) the $eval_{data}$ for that value, and (iii) the doubly-encrypted identifier $deid_i$. For each value $val_{data}$, the service apparatus 120 can append a map to the map $M$2 for each encrypted identifier $eid_{query.i}$.

The intermediate encrypted identifier $intermediate\_eid_{data}$ is used in this stage ensure that a querier can only decrypt the associated value for any matching identifiers. Even if a querier obtains the encrypted value data $eval_{data}$, the querier would need the intermediate encrypted identifier $intermediate\_eid_{data}$ to decrypt $eval_{data}$ correctly, and it only gets this if the queried identifier is matching.

The private set membership check protocol can be configured to prevent the optional data app sync stage (240) in which the data app 114 learns the membership result of the query app 112. For example, the data app upload stage 220 can be adjusted by having the data app 114 generate an ephemeral private key in place of the local private key $D$ for each upload. AS a result, the data app 114 does not need to store any long-term information across multiple uploads.

In the query app query stage (230), the query app 112 retrieves the map $M$2 from the service apparatus 120 and performs matching to obtain the values of the data for matching identifiers. To retrieve the map $M$2, the query app 112 can send its encrypted identifier $eid_{query}$ to the service apparatus 120. The encrypted identifier $eid_{query}$ can be computed using Equation 2, as described above. However, the query app 112 can store this after the initial computation to reduce the number of computations.

The service apparatus 120 receives the encrypted identifier $eid_{query}$ and sends a portion of the map $M$2 to the query app 112. In particular, the service apparatus 120 can identify the tuples within the map $M$2 that match the encrypted identifier $eid_{query}$. As described above in the map $M$2 includes (i) an encrypted identifier $eid_{data}$ for the data app 114 that uploaded the data, (ii) the $eval_{data}$ for a value, and (iii) a doubly-encrypted identifier $deid_i$. A tuple can be represented as ($eid_{data.j}$, $eval_{data.j}$, $deid_i$).

The query app 112 receives the tuples of the Map M2 and performs the matching. The M tuples (where M is any integer) received from the service apparatus 112 can be represented as [($eid_{gata.1}$, $eval_{data.1}$, $deid_{i.1}$), ($eid_{data.M}$, $eval_{data.M}$, $deid_{i.M}$).

The query app 112 can set a member result parameter *member result* to non-member and set a member value parameter *member val* to null at the beginning of the matching process. Optionally, if the protocol includes the data app sync stage 240, the query app 112 can also set a data app result list *data_app_result_list* to null (e.g., an empty set []).

For j = 1 to M, the query app 112 can perform a series of operations for each tuple to determine if the identifier of the tuple matches. In particular, the query app 112 can generate a candidate intermediate encrypted identifier *candidate. intermediate. $eid_j$* using the doubly encrypted identifier $deid_{i.j}$ and the query app private key $Q$. For example, the query app 112 can compute *candidate. intermediate. $eid_j$* using Equation 9 below:

$$\text{Equation 9:} \quad candidate.\,intermediate.\,eid_j = (deid_{i.j})^{1/Q}$$

The query app 112 can then compute a candidate encrypted identifier $candidate.\,eid_j$ by applying the hash function $H'$ to the candidate intermediate encrypted identifier $candidate.\,intermediate.\,eid_j$, e.g., using Equation 10 below:

$$\text{Equation 10:} \quad candidate.\,eid_j = H'(candidate.\,intermediate.\,eid_j)$$

The query app can then determine whether the candidate encrypted identifier $candidate.\,eid_j$ matches the encrypted identifier $eid_{data.j}$ of the tuple. If so, the tuple represents a match between the encrypted identifier $eid_{data.j}$ of the data app 114 and the encrypted identifier $eid_{query.j}$ of the query app 112 that is performing the matching.

If there is a match, the query app 112 can decrypt the encrypted value data $eval_{data.j}$ of the tuple. To do so, the query app 112 can compute a value key $valkey_j$ using the candidate intermediate encrypted identifier $candidate.\,intermediate.\,eid_j$, e.g., using Equation 11 below:

$valkey_j = HKDF\,(candidate.\,intermediate.\,eid_j,\ info = \text{"encrypted value key"})$ \hfill Equation 11:

In Equation 11, the information parameter "info" should be the same one used in prior operations to derive encrypted value keys. The query app 112 can also compute the value by decrypting the encrypted value data $eval_{data.j}$ of the tuple using the value key $valkey_j$. For example, the query app 112 can decrypt the value using Equation 12 below:

$$\text{Equation 12:} \quad val_j = Dec(valkey_j,\ eval_{data.j})$$

In Equation 12, $Dec$ is a decryption function corresponding to the encryption function $Enc$ of Equation 7 and $valkey_j$ is the decryption key used by the decryption function $Dec$ to decrypt the value $val_j$. For example, $Enc$ and $Dec$ can be a symmetric key encryption scheme (e.g., AES).

If there is a match, the query app 112 can also set the member result parameter *member result* to member and set the member value parameter *member_val* to the decrypted value $val_j$.

Optionally, if the protocol includes the data app sync stage 240, the query app 112 can also compute an encrypted match parameter $emateh_{data.j}$ using Equation 13 below:

$emateh_{data.j} = HKDF(candidate.\,intermediate.\,eid_j,\ info = \text{"encrypted match info"})$ \hfill Equation 13:

The information parameter *info* should be different from the information parameters used in prior operations to derive encrypted value keys. Additionally, the query app 112 can append the encrypted match parameter $emateh_{data.j}$ to *data_app_result_list*. For example, the query app 112 can append a tuple of ($eid_{data.j}$, $ematch_{data.j}$) to *data_app_result_list*. The encrypted match parameter $ematch_{data.j}$ enables the data app 114 to compute encrypted match data to determine whether one or more query apps 112 matches with some data uploaded by the data app 114.

If there is not a match between the candidate encrypted identifier $candidate.\,eid_j$ and the encrypted identifier $eid_{data.j}$ of the tuple being processed, the query app 112 can compute the encrypted match parameter $ematch_{data.j}$ as random bytes of length equal to the output of the HKDF and append the tuple ($eid_{data.j}$, $ematch_{data.j}$) with this random value of $emateh_{data.j}$ to *data_app_result_list*. In other words, the query app 112 can compute an encryption of a non-match by picking a random string that will not satisfy a hash equation used to check in the final step performed by the data app 114.

After processing each tuple of the map $M2$ received from the service apparatus 120, the query app 112 can send the member result parameter *member_result* and the member value parameter *member_val* for each match to the service apparatus 120. That is, the query app 112 can send the final result to the service apparatus 120 so that the service apparatus 120 can use the results for other purposes. The query app 112 can also send *data_app_result_list,* if generated, to the service apparatus 120.

In some implementations, the query app 112 can also aggregate information from multiple query apps 112 to generate various data, e.g., to computer metrics or other aggregated data. For example, the query app 112 can aggregate the information from multiple query apps 112 to generate a list of all apps installed on the client device 110, the total amount of purchases made by the user of the client device 110 across these apps, etc.

The service apparatus 120 can use the member value parameters to select and/or adjust content, e.g., digital components, for presentation at the client device 110. For example, if the member value parameters *member_val* represent identifiers of apps installed on the client device 110, the service apparatus 120 can select and/or adjust digital components based on the list of apps installed on the client device 110.

In some implementations, the query app 112 can apply differential privacy to the values before sending them to the service apparatus 120. For example, the query app 112 can add identifiers of apps that did not match and/or remove identifiers of apps that did match to inject noise into the data received by the service apparatus 120. This provides plausible deniability in the profile data that is sent from the query app 112 to the service apparatus 120. Some example techniques for generating a noisy profile include using probabilistic data structures (e.g. Bloom filters or cuckoo filters) to send the values to the service apparatus 120, blurry app profiles, stable noise injection, and obvious key-vale store (OKVS).

The optional data app sync stage (240) can be used by the data app 114 to determine whether any query app's queries matched any of the user identifiers uploaded by the data app 114. The service apparatus 120 can generate and/or update the third map M3 based on the data app result list $data\_app\_result\_list$. For a number M of matches, $data\_app\_result\_list$ can be in the form of [($eid_{data.1}$, $ematch_{data.1}$), ($eid_{data.2}$, $ematch_{data.2}$) ... ($eid_{data.M}$, $ematch_{data.M}$)]. For j=1 to M, the service apparatus 120 can append a map between $eid_{data.j}$ and $ematch_{data.j}$ to the map M3.

The data app 114 can compute (or retrieve from storage) an intermediate encrypted identifier $intermediate\_eid_{data}$ using Equation 4 above. The data app 114 can also compute (or retrieve from storage) the encrypted identifier $eid_{data}$ using Equation 5 above. The data app 114 can send the encrypted identifier $eid_{data}$ to the service apparatus 120, e.g., along with a request for the map M3.

In response, the service apparatus 120 can return a portion of the map M3 to the data app 114. For example, the service apparatus 120 can identify, within the map M3, each encrypted match parameter $ematch_{data.j}$ that is mapped to an encrypted identifier that matches the encrypted identifier $eid_{data}$ received from the data app 114. In this example, the portion of the map M3 returned to the data app 114 can be in the form of $M3[eid_{data}]$ = [$ematch_{data.i}$, $ematch_{data.2}$, ... $ematch_{data.N}$] for a number N matches.

The data app 114 can receive this map M3 and compute a match parameter $match_{data}$, e.g., using Equation 14 below:

$$match_{data} = HKFD(intermediate_{eiddata}, info = \text{"encrypted match info"}) \qquad \text{Equation 14:}$$

For i = 1 to N, the data app 114 can determine whether the match parameter $match_{data}$ matches the encrypted match parameter $ematch_{data.j}$. If so, there exists at least one query app whose query matched the user identifier $id_{data}$ of the data app 114. If not, there is no matches.

Using this private set membership check protocol, no party in the protocol is able to learn any identifiers or values in plaintext throughout the protocol. Furthermore, the service apparatus 120 only learns L-bit hash prefixes (or other L-bits of a hash) of every identifier in the protocol. The query app 112 does not learn any information about identifiers beyond its own queried identifiers. The data app 114 does not learn any information about identified beyond its own imported identifiers.

FIG. 3 is a flow chart of an example process 300 of exchanging data using a private set membership check protocol. Operations of the process 300 can be performed, for example, by the client device 110, e.g., by the query app 112 and the data app 114, the service apparatus 120, and/or another data processing apparatus. The operations of the process 300 can also be implemented as instructions stored on one or more computer readable media, which can be non-transitory. Execution of the instructions, by one or more data processing apparatus, causes the one or more data processing apparatus to perform operations of the process 300.

A query app of a client device sends a first encrypted identifier and a first hashed identifier to a service apparatus (310). For example, the query app can generate a first encrypted identifier $eid_{query}$ and a first hashed identifier $hid_{query}$, as described above with reference to the query app setup stage 210 of FIG. 2.

A data app of the client device obtains a set of encrypted identifiers from the service apparatus (320). As described above with reference to the data app upload stage 220 of FIG. 2, the data app can generate and send a second hashed identifier $hid_{data}$ to the service apparatus and the service apparatus can respond with a set of first encrypted identifiers [$eid_{query.1}$, $eid_{query.2}$, ... $eid_{query.N}$] from the first map $M1$. In particular, these first encrypted identifiers are those that are mapped to a hashed identifier that matches the second hashed identifier $hid_{data}$ in the first map $M1$.

For each of one or more values, the data app sends a set of data to the service apparatus (330). As described above with reference to the data app upload stage 220 of FIG. 2, the data app can generate encrypted value data $eval_{data}$ for each value. The data app can also generate, for each value, a set of data that includes (i) the encrypted identifier $eid_{data}$, (ii) the encrypted value data $eval_{data}$ for that value, and, for each encrypted identifier $eid_{query.i}$ (iii) a tuple that includes the encrypted identifier $eid_{query.i}$ and its corresponding doubly-encrypted identifier $deid_i$. This set of tuples can be represented as [($eid_{query.1}$, $deid_1$), ($eid_{query.2}$, $deid_2$), ... ($eid_{query.2}$, $deid_2$)].

The query app obtains one or more second tuples (340). As described above with reference to stage 230 of FIG. 2, the query app can submit a query with the encrypted identifier $eid_{query}$ to the service apparatus. The service apparatus can identify the tuples of the second map $M2$ that are mapped to an encrypted identifier that matches the encrypted identifier $eid_{query}$. The service apparatus can send these tuples to the query app. Each tuple can include (i) an encrypted identifier $eid_{data}$ for the data app 114 that uploaded the data, (ii) the $eval_{data}$ for a value, and (iii) a doubly-encrypted identifier $deid_i$. A tuple can be represented as ($eid_{data.j}$, $eval_{data.j}$, $deid_i$).

The query app determines whether there is a match for each tuple (350). For example, the query app can determine whether the doubly-encrypted identifier represents an identifier that matches the second encrypted identifier $eid_{data}$, as described above with reference to the query app query stage 230 of FIG. 2.

If there is not a match, the query app can proceed to the next tuple (355) until all tuples are checked for a match. If there is a match, the query app can decrypt the value of the encrypted value data $eval_{data}$ of the tuple to obtain the value in cleartext, as described above with reference to the query app query stage 230 of FIG. 2. The query app can also send the decrypted value of each matching tuple to the service apparatus.

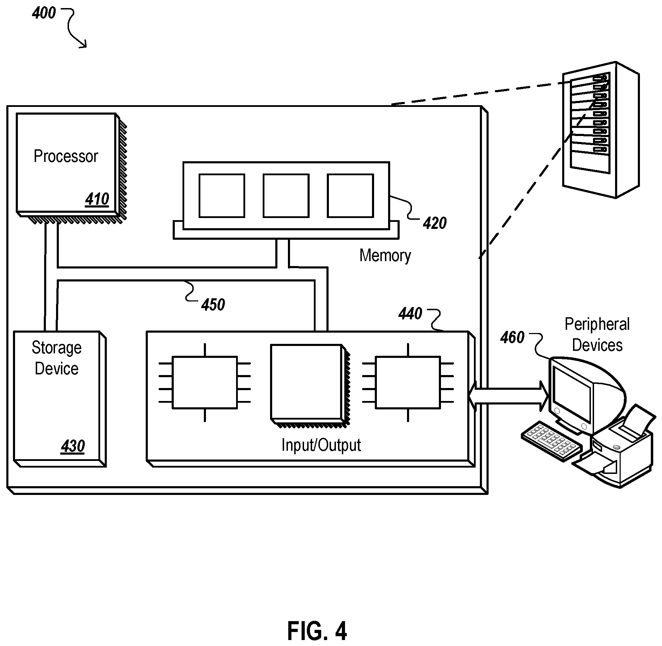

FIG. 4 is a block diagram of an example computer system 400 that can be used to perform operations described above. The system 400 includes a processor 410, a memory 420, a storage device 430, and an input/output device 440. Each of the components 410, 420, 430, and 440 can be interconnected, for example, using a system bus 450. The processor 410 is capable of processing instructions for execution within the system 400. In one implementation, the processor 410 is a single-threaded processor. In another implementation, the processor 410 is a multi-threaded processor. The processor 410 is capable of processing instructions stored in the memory 420 or on the storage device 430.

The memory 420 stores information within the system 400. In one implementation, the memory 420 is a computer-readable medium. In one implementation, the memory 420 is a volatile memory unit. In another implementation, the memory 420 is a non-volatile memory unit.

The storage device 430 is capable of providing mass storage for the system 400. In one implementation, the storage device 430 is a computer-readable medium. In various different implementations, the storage device 430 can include, for example, a hard disk device, an optical disk device, a storage device that is shared over a network by multiple computing devices (e.g., a cloud storage device), or some other large capacity storage device.

The input/output device 440 provides input/output operations for the system 400. In one implementation, the input/output device 440 can include one or more of a network interface devices, e.g., an Ethernet card, a serial communication device, e.g., and RS-232 port, and/or a wireless interface device, e.g., and 802.11 card. In another implementation, the input/output device can include driver devices configured to receive input data and send output data to other devices, e.g., keyboard, printer, display, and other peripheral devices 460. Other implementations, however, can also be used, such as mobile computing devices, mobile communication devices, set-top box television client devices, etc.

Although an example processing system has been described in FIG. 4, implementations of the subject matter and the functional operations described in this specification can be implemented in other types of digital electronic circuitry, or in computer software, firmware, or hardware, including the structures disclosed in this specification and their structural equivalents, or in combinations of one or more of them.

An electronic document (which for brevity will simply be referred to as a document) does not necessarily correspond to a file. A document may be stored in a portion of a file that holds other documents, in a single file dedicated to the document in question, or in multiple coordinated files.

For situations in which the systems discussed here collect and/or use personal information about users, the users may be provided with an opportunity to enable/disable or control programs or features that may collect and/or use personal information (e.g., information about a user's social network, social actions or activities, a user's preferences, or a user's current location). In addition, certain data may be treated in one or more ways before it is stored or used, so that personally identifiable information associated with the user is removed. For example, a user's identity may be anonymized so that the no personally identifiable information can be determined for the user, or a user's geographic location may be generalized where location information is obtained (such as to a city, ZIP code, or state level), so that a particular location of a user cannot be determined.

Embodiments of the subject matter and the operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented as one or more computer programs, i.e., one or more modules of computer program instructions, encoded on computer storage medium for execution by, or to control the operation of, data processing apparatus. Alternatively, or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described in this specification can be implemented as operations performed by a data processing apparatus on data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

This document refers to a service apparatus. As used herein, a service apparatus is one or more data processing apparatus that perform operations to facilitate the distribution of content over a network. The service apparatus is depicted as a single block in block diagrams. However, while the service apparatus could be a single device or single set of devices, this disclosure contemplates that the service apparatus could also be a group of devices, or even multiple different systems that communicate in order to provide various content to client devices. For example, the service apparatus could encompass one or more of a search system, a video streaming service, an audio streaming service, an email service, a navigation service, an advertising service, a gaming service, or any other service.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatus can also be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for performing actions in accordance with instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits data (e.g., an HTML page) to a client device (e.g., for purposes of displaying data to and receiving user input from a user interacting with the client device). Data generated at the client device (e.g., a result of the user interaction) can be received from the client device at the server.

While this specification contains many specific implementation details, these should not be construed as limitations on the scope of any inventions or of what may be claimed, but rather as descriptions of features specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

**Claims**

1.   A method, comprising:

   sending, by a query app of a first client device and to a service apparatus, a first encrypted identifier generated by the query app and a first hashed identifier generated by the query app;
   obtaining, by a data app of a second client device and from the service apparatus, a set of encrypted identifiers that are mapped, in a first map, to hashed identifiers that match the first hashed identifier, wherein the data app is configured to store data that is queried by the query app;
   for each value of one or more values, sending, by the data app and to the service apparatus, a set of data comprising (i) a second encrypted identifier generated by the data app, (ii) a respective encrypted value element that encrypts the value, and (iii) one or more first tuples, wherein each first tuple comprises a given first encrypted identifier from the first map and a doubly-encrypted identifier;
   obtaining, by the query app and from the service apparatus, one or more second tuples that are each mapped, in a second map, at the service apparatus to an encrypted identifier that matches the first encrypted identifier, wherein each second tuple comprises a respective encrypted second identifier, an encrypted value element that encrypts a corresponding value, and a doubly-encrypted identifier;
   for each second tuple, determining, by the query app, whether the doubly-encrypted identifier represents an identifier that matches the second encrypted identifier; and
   for each second tuple for which the doubly-encrypted identifier represents an identifier that matches the second encrypted identifier, decrypting, by the query app, the encrypted value element of the second tuple.

2.   The method of claim 1, wherein the first client device is the same device as the second client device.

3.   The method of claim 1 or 2, wherein the query app is unable to communicate directly with the data app on the client device.

4.   The method of claim 1 or 3, wherein the first client device is a different device than the second client device.

5.   The method of any preceding claim, wherein each identifier comprises an identifier of a user of the client device.

6. The method of any preceding claim, comprising, for each second tuple for which the doubly-encrypted identifier represents an identifier that matches the second encrypted identifier, sending the decrypted value to the service apparatus.

7. The method of claim 5, wherein:

   the corresponding value of each second tuple for which the doubly-encrypted identifier represents an identifier that matches the second encrypted identifier comprises an identifier of an app installed on the client device; and
   the service apparatus is configured to select digital components for presentation at the client device based on each decrypted value received from the query app.

8. The method of any preceding claim, wherein the first map comprises a mapping of encrypted identifiers to hashed identifiers received from the service apparatus for multiple different query apps installed on the first client device.

9. The method of any preceding claim, further comprising:
   for each second tuple for which the doubly-encrypted identifier that represents an identifier that matches the second encrypted identifier,

   computing a candidate intermediate encrypted identifier based on the doubly-encrypted identifier and a private key of the query app;
   computing a candidate encrypted identifier by applying a first hash function to the candidate intermediate identifier;
   determining whether the candidate encrypted identifier matches the second encrypted identifier of the second tuple;
   in response to determining that the encrypted candidate intermediate identifier matches the second encrypted identifier of the second tuple,

   decrypting the encrypting value element of the second tuple;
   computing an encrypted match parameter by applying a second hash function to the candidate intermediate encrypted identifier;
   appending a tuple that includes the encrypted match parameter and the second encrypted identifier of the second tuple to a result list;
   sending the tuple to the service apparatus.

10. The method of claim 9, further comprising:

    obtaining, by the data app and from the service apparatus, a portion of a third map that maps encrypted match parameters to second encrypted identifiers;
    computing a match parameter based on an intermediate encrypted identifier computed by the data app;
    determining whether the match parameter matches any encrypted match parameter in the portion of the third map; and
    in response to determining that the match parameter matches at least one encrypted match parameter in the portion of the third map, determining that at least one query submitted by at least one query app matches data of the data app.

11. A system comprising:

    one or more processors; and
    one or more storage devices storing instructions that, when executed by the one or more processors, cause the one or more processors to carry out the method of any preceding claim.

12. A computer readable storage medium carrying instructions that, when executed by one or more processors, cause the one or more processors to carry out the method of any one of claims 1 to 10.

13. A computer program product comprising instructions which, when executed by one or more computers, cause the one or more computers to carry out the steps of the method of any of claims 1 to 10.

**FIG. 1**

FIG. 2

300

Send, by a query app, a first encrypted identifier and a first hashed identifier to a service apparatus — 310

↓

Obtain, by a data app, a set of encrypted identifiers — 320

↓

For each of one or more values, send, by the data app, a set of data to the service apparatus — 330

↓

Obtain, by the query app, one or more second tuples — 340

↓

Match — 350    No →    Proceed to next tuple — 355

↓ Yes

Decrypt the value — 360

**FIG. 3**

400

Processor

410

Memory

420

450

440

Storage Device

430

Input/Output

460

Peripheral Devices

FIG. 4

Europäisches
Patentamt

European
Patent Office

Office européen
des brevets

# EUROPEAN SEARCH REPORT

**Application Number**

EP 25 19 6028

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/211496 A1 (GOOGLE LLC [US]) 2 November 2023 (2023-11-02) * abstract * * paragraph [0002] - paragraph [0025] * * paragraph [0037] - paragraph [0128]; figures 2A,2B,3A,3B,4 * | 1-13 | INV.<br>G06F21/62<br>H04L9/00<br>H04W12/02 |
| A | WO 2023/192071 A1 (VISA INT SERVICE ASS [US]) 5 October 2023 (2023-10-05) * abstract * * paragraph [0004] - paragraph [0015] * * paragraph [0042] - paragraph [0072] * | 1-13 | |
| A | US 10 635 824 B1 (TRIANDOPOULOS NIKOLAOS [US] ET AL) 28 April 2020 (2020-04-28) * abstract * * column 1, line 30 - column 2, line 61 * * column 7, line 18 - column 16, line 41 * | 1-13 | |

| | |
|---|---|
| | **TECHNICAL FIELDS SEARCHED (IPC)** |
| | G06F<br>H04L<br>H04W |

The present search report has been drawn up for all claims

| Place of search | Date of completion of the search | Examiner |
|---|---|---|
| Munich | 22 November 2025 | Jakob, Gregor |

EPO FORM 1503 03.82 (P04C01)

## ANNEX TO THE EUROPEAN SEARCH REPORT
## ON EUROPEAN PATENT APPLICATION NO.

EP 25 19 6028

This annex lists the patent family members relating to the patent documents cited in the above-mentioned European search report.
The members are as contained in the European Patent Office EDP file on
The European Patent Office is in no way liable for these particulars which are merely given for the purpose of information.

22-11-2025

| Patent document cited in search report | Publication date | Patent family member(s) | Publication date |
|---|---|---|---|
| WO 2023211496 A1 | 02-11-2023 | CN 117321593 A | 29-12-2023 |
| | | EP 4305537 A1 | 17-01-2024 |
| | | IL 292554 A | 01-11-2023 |
| | | US 2025038956 A1 | 30-01-2025 |
| | | WO 2023211496 A1 | 02-11-2023 |
| WO 2023192071 A1 | 05-10-2023 | CN 118975195 A | 15-11-2024 |
| | | EP 4500800 A1 | 05-02-2025 |
| | | US 2025211445 A1 | 26-06-2025 |
| | | WO 2023192071 A1 | 05-10-2023 |
| US 10635824 B1 | 28-04-2020 | NONE | |

EPO FORM P0459

For more details about this annex : see Official Journal of the European Patent Office, No. 12/82